# EUROPEAN PATENT APPLICATION

(11) **EP 4 641 882 A1**
(43) Date of publication of application: **29.10.2025**
(21) Application number: 25169748.8
(22) Date of filing: 10.04.2025
(51) Int. Cl.: H02J 13/00, G05B 15/02, H04L 12/28, H04L 12/10, H04L 12/12

(54) **GATEWAY RECOVERY IN A CONNECTED POWER SYSTEM WITHOUT LOSING CONFIGURATION AND/OR OTHER DATA**

(30) Priority: 16.04.2024 IN 202411030445
(71) Applicant: Honeywell International Inc., Charlotte, NC 28202 (US)
(72) Inventor: BROWN, Neil, Charlotte, 28202 (US); DAS, Shyam Mohan, Charlotte, 28202 (US); DURAIRAJ, Vinoth, Charlotte, 28202 (US); SINGH, Rajiv, Charlotte, 28202 (US); D, Venkatram, Charlotte, 28202 (US)
(74) Representative: Haseltine Lake Kempner LLP

(57) **Abstract**

A method and system for replacing a gateway device that interfaces between smart sockets and a supervisor controller. The smart sockets include plug receptacles that can selectively control power based on signals from the gateway. Each socket wirelessly communicates with the gateway device. The gateway device stores parameters for paired smart sockets, including configuration settings and in some cases energy usage data. Before replacement, parameters are backed up to a remote location. After installing a replacement gateway device, the backed-up parameters are uploaded to restore the original configuration. In some cases, each socket wirelessly communicates with the gateway device to report energy consumption, which the gateway then accumulates over time. The replacement gateway continues tracking energy usage starting from the restored values. Other parameters may include socket IDs, Bluetooth IDs, appliance types, operating modes, schedules, and power settings for each paired smart socket.

## Description

### RELATED APPLICATIONS

This application claims the benefit of Indian Provisional Application No. 202411030445 filed April 16, 2024, which application is incorporated by reference herein.

### TECHNICAL FIELD

The present disclosure relates generally to connected power systems, and more particularly to gateway recovery in a connected power system without losing designated data.

### BACKGROUND

Connected power systems typically include a number of smart sockets that can be centrally monitored and controlled. In some connected power systems, the smart sockets are connected to a source of power, and provide power to various electrical devices that are plugged into receptacles forming part of the smart sockets. The smart sockets report various operational parameters to a gateway device, and the gateway device communicates with a supervisory controller. In some cases, the smart sockets may form a mesh network between the smart sockets and a gateway device that is assigned to those smart sockets. The gateway device may be connected to the supervisory controller via a wired connection such as an ethernet connection and/or through a wireless connection. In some cases, the gateway device stores various parameters and data, including configuration settings, that allow the gateway device to communicate with the smart sockets.

Gateway devices can fail and need to be replaced. When a first gateway device is removed and a new gateway device is installed, various configuration settings need to be provided for the connected power system to function properly. This can be a time-consuming and error-prone process. What would be desirable are methods and systems for being able to automatically store these configuration settings (and in some cases other data) in the supervisory controller so that the configuration settings (and in some cases other data) can be downloaded to a replacement gateway device without requiring substantial intervention.

### SUMMARY

The present disclosure relates generally to connected power systems, and more particularly to gateway recovery in a connected power system without losing designated data. An example may be found in a method for replacing a gateway device that is functioning as a gateway between one or more smart sockets of a facility and a supervisor controller. Each of the one or more smart sockets are paired with the gateway device to establish a wireless communication channel between the respective smart socket and the gateway device. Each of the one or more smart sockets includes a plug receptacle for receiving a plug from a respective appliance or other load and each of the one or more smart sockets is configured to selectively turn power on and off to the respective plug receptacle based on a respective control signal received from the gateway device via the respective wireless communication channel. The gateway device stores a plurality of parameters associated with each of the one or more smart sockets that are paired with the gateway device including one or more configuration parameters that configure the gateway device to interact with the respective smart socket in a configured manner. The plurality of parameters may also include other data, such as operational data associated with one or more of the smart sockets that are paired with the gateway device. The plurality of parameters are used and/or updated by the gateway device when the gateway device is in service. The illustrative method includes repeatedly or periodically downloading a backup of the plurality of parameters associated with each of the one or more smart sockets that are paired with the gateway device to a backup location remote from the gateway device, such as at the supervisor controller. In the illustrative method, the gateway device is removed from service and is replaced with a replacement gateway device. The replacement gateway device is discovered by the supervisor controller. The backup of the plurality of parameters associated with each of the one or more smart sockets is uploaded from the backup location to the replacement gateway device. The replacement gateway device is placed into service. The plurality of parameters are then used and/or updated by the replacement gateway device when the replacement gateway device is in service.

Another example may be found in a system. The illustrative system includes a supervisor controller, a gateway device, and one or more smart sockets that each include a plug receptacle for receiving a plug from a respective appliance. Each of the one or more smart sockets is paired with the gateway device to establish wireless communication between the respective smart socket and the gateway device, and each of the one or more smart sockets is configured to selectively turn power on and off to the respective plug receptacle based on a respective control signal received from the gateway device via the wireless communication. The gateway device is configured to store a plurality of parameters associated with each of the one or more smart sockets that are paired with the gateway device, including one or more configuration parameters that configure the gateway device to interact with the respective smart socket in a configured manner. The plurality of parameters are used and/or updated by the gateway device when the gateway device is in service. The gateway device is configured to repeatedly download a backup of the plurality of parameters associated with each of the one or more smart sockets to the supervisor controller. When the gateway device is removed from service and replaced with a replacement gateway device, the supervisor controller is configured to upload the backup of the plurality of parameters associated with each of the one or more smart sockets to the replacement gateway device. The replacement gateway device is configured to establish wireless communication with each of the one or more smart sockets based at least in part on one or more the plurality of parameters uploaded from the backup. After the replacement gateway device is placed service, at least some of the plurality of parameters are used and/or updated by the replacement gateway device.

Another example may be found in a method for replacing a gateway device that is functioning as a gateway between one or more smart sockets of a facility and a supervisor controller. Each of the one or more smart sockets includes a plug receptacle for receiving a plug from a respective appliance and each of the one or more smart sockets is configured to selectively turn power on and off to the respective plug receptacle based on a respective control signal received from the gateway device. The gateway device stores a plurality of parameters associated with each of the one or more smart sockets, including one or more configuration parameters that configure the gateway device to interact with the respective smart socket in a configured manner. The plurality of parameters include one or more dynamic parameters that are repeatedly updated by the gateway device when the gateway device is in service, such as an accumulated measure of energy consumed by an appliance plugged into a respective smart socket. The illustrative method includes repeatedly downloading a backup of the plurality of parameters associated with each of the one or more smart sockets that are paired with the gateway device to a backup location remote from the gateway device. In this illustrative method, the gateway device is replaced with a replacement gateway device. The backup of the plurality of parameters associated with each of the one or more smart sockets is uploaded from the backup location to the replacement gateway device. The replacement gateway device is placed into service. The plurality of parameters are used to configure the replacement gateway device to interact with the one or more smart socket in the configured manner, and the replacement gateway device is configured to update one or more of the dynamic parameters to start from a value that is based at least in part on the respective parameter uploaded from the backup.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative connected power system;
Figure 2 is a flow diagram showing an illustrative method for replacing a gateway device in a connected power system;
Figure 3 is a flow diagram showing an illustrative method for replacing a gateway device in a connected power system;
Figure 4 is a flow diagram showing an illustrative method; and
Figure 5 is a screen capture showing part of an illustrative method for replacing a gateway device in a connected power system.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

In some instances, each of one or more smart sockets include a plug receptacle for receiving a plug from a respective appliance, and each of the one or more smart sockets is configured to selectively turn power on and off to the respective plug receptacle based on a respective control signal received from a gateway device. The gateway device stores a plurality of parameters associated with each of the one or more smart sockets including one or more configuration parameters that configure the gateway device to interact with the respective smart socket in a configured manner. The plurality of parameters are used and/or updated by the gateway device when the gateway device is in service. In some cases, the plurality of parameters include one or more dynamic parameters that are repeatedly updated by the gateway device when the gateway device is in service, such as an accumulated measure of energy consumed by an appliance plugged into the respective smart socket.

If the gateway device fails, the gateway device may be replaced with a replacement gateway device. To avoid the manual configuration of the new gateway, and to avoid loss of dynamic parameters/data previously stored in the failed gateway device, a gateway device replacement process may be used. In one instance, a precautionary backup of the plurality of parameters of the original gateway is made, sometimes repeated regularly during previous normal operation of the failed gateway device, to capture updates to the plurality of parameters over time. When the original gateway fail, the backup may be uploaded to the replacement gateway device, which may re-establish the original configuration of the original gateway device in the replacement gateway device, and in some cases, re-establishes the dynamic parameters/data recorded by the original gateway device in the replacement gateway device.

A particular example method includes: downloading a backup copy of the plurality of parameters associated with each of one or more smart sockets that are paired with the gateway device to a backup location remote from the gateway device; replacing the gateway device with a replacement gateway device; uploading the backup of the plurality of parameters associated with each of the one or more smart sockets from the backup location to the replacement gateway device; and placing the replacement gateway device into service, wherein the plurality of parameters configure the replacement gateway device to interact with the respective smart socket in the configured manner.

The plurality of parameters may include a list of the smart sockets that are associated to the gateway device, a socket name for each identified socket, a socket location of each of the identified socket, and/or a Bluetooth address and/or unique identifier of each of the smart sockets. Alternatively, or in addition, the plurality of parameters may include one or more of: a type of appliance, if any, that is plugged into the respective plug of each of the one or more smart sockets; a current operating mode of the appliance, if any, that is plugged into the respective plug of each of the one or more smart sockets; a time schedule associated with the appliance, if any, that is plugged into the respective plug of each of the one or more smart sockets; and a lock power off setting associated with each of the one or more smart sockets. In some cases, the replacement gateway device is configured to update one or more dynamic parameters starting from a value that is based at least in part on the respective parameter uploaded from the backup. In some cases, the one or more dynamic parameters received from the one or more smart sockets can include, for example, measured values of energy, power, current, voltage, temperature captured over time. In some cases, the one or more dynamic parameters may include an accumulated measure of energy or power consumed by an appliance plugged into a respective smart socket, rather than or in addition to a time series of the measure of energy or power consumed by the appliance. These are just examples.

In some cases, the backup may be stored in a gateway device replacement file. Once the system detects a non-functional gateway device in the system, an operator/engineer needs to replace the non-functional gateway device with a replacement gateway device, and discover and add the new gateway device to the system. Once the replacement gateway device is added to the system, an operator may identify and upload the appropriate gateway device replacement file to the replacement gateway device to restore the existing configurations. In some cases, once the replacement gateway device is added to the system, the system may automatically identify and upload the appropriate gateway device replacement file to the replacement gateway device to restore the existing configurations. Once uploaded (and sometimes after rebooting the replacement gateway device), the replacement gateway device may continue operations of the faulty gateway device, sometimes with the previously recorded dynamic parameters and existing socket details.

In an example, a method may allow for replacing a gateway device that is functioning as a gateway between one or more smart sockets of a facility and a supervisor controller, where each of the one or more smart sockets are paired with the gateway device to establish a wireless communication channel between the respective smart socket and the gateway device. Each of the one or more smart sockets include a plug receptacle for receiving a plug from a respective appliance and each of the one or more smart sockets are configured to selectively turn power on and off to the respective plug receptacle based on a respective control signal received from the gateway device via the respective wireless communication channel. The gateway device stores a plurality of parameters associated with each of the one or more smart sockets that are paired with the gateway device including one or more configuration parameters that configure the gateway device to interact with the respective smart socket in a configured manner, wherein the plurality of parameters are used and/or updated by the gateway device when the gateway device is in service. The illustrative method includes downloading a backup of the plurality of parameters associated with each of the one or more smart sockets that are paired with the gateway device to a backup location remote from the gateway device. The gateway device is then removed from service and is replaced with a replacement gateway device. The replacement gateway device is discovered, and the backup of the plurality of parameters associated with each of the one or more smart sockets is uploaded from the backup location to the replacement gateway device. The replacement gateway device is placed into service, wherein the plurality of parameters are used and/or updated by the replacement gateway device when the replacement gateway device is in service.

In some cases, each of the one or more smart sockets is configured to repeatedly detect a measure of energy consumed by an appliance plugged into the plug receptacle of the respective smart socket and to repeatedly wirelessly communicate the measure of energy to the gateway device via the respective wireless communication channel. In turn, the gateway device may be configured to repeatedly receive the measure of energy wirelessly communicated by each of the one or more smart sockets, accumulate the measure of energy for each of the one or more smart sockets over time, and store a respective accumulated energy parameter for each of the one or more smart sockets. The plurality of parameters associated with each of the one or more smart sockets include the respective accumulated energy parameter. In some cases, the replacement gateway device, once placed into service, continues to accumulate the measure of energy for each of the one or more smart sockets starting from a measure of accumulated energy that is based at least in part on the respective accumulated energy parameter uploaded from the backup.

In some cases, the supervisor controller may be a server, and the gateway device may be operatively coupled to the server via a wired and/or wireless connection. As an example, the wired connection may include the Internet. In some cases, the backup location includes the supervisor controller. The plurality of parameters may include a unique socket ID for each of the one or more smart sockets that are associated with the gateway device. In some cases, the wireless communication channel for each of the one or more smart sockets that are associated with the gateway device may include a Bluetooth communication channel, and the plurality of parameters may include a unique Bluetooth ID for each of the one or more smart sockets that are associated with the gateway device. Each of the one or more smart sockets may be paired with the gateway device via a wireless mesh network, and the wireless communication channel for each of the one or more smart sockets that are associated with the gateway device may be part of the wireless mesh network.

The plurality of parameters may include a type of appliance, if any, that is plugged into the respective plug of each of the one or more smart sockets. The plurality of parameters may include a current operating mode of the appliance, if any, that is plugged into the respective plug of each of the one or more smart sockets. The plurality of parameters may include a time schedule associated with the appliance, if any, that is plugged into the respective plug of each of the one or more smart sockets. The plurality of parameters may include a lock power off setting associated with each of the one or more smart sockets. The lock power off setting keeps power OFF to the appliance, if any, that is plugged into the respective plug of the smart socket even when a user attempts to manually switch power ON to the respective plug via a manual power switch of the respective smart socket.

In some cases, the method may include repeatedly downloading the backup of the plurality of parameters associated with each of the one or more smart sockets that are paired with the gateway device to the backup location remote from the gateway device. In some cases, the backup of the plurality of parameters are periodically downloaded, or downloaded according to predetermined schedule. These are just examples. The method may include identifying that the gateway device needs replacement before replacing the gateway device with the replacement gateway device. As an example, identifying that the gateway device needs replacement may include the supervisor controller identifying that the gateway device is currently offline and/or has been offline for at least a threshold period of time.

An example system may include a supervisor controller, a gateway device, and one or more smart sockets, wherein each of the one or more smart sockets include a plug receptacle for receiving a plug from a respective appliance. Each of the one or more smart sockets is paired with the gateway device to establish wireless communication between the respective smart socket and the gateway device, and each of the one or more smart sockets is configured to selectively turn power on and off to the respective plug receptacle based on a respective control signal received from the gateway device via the wireless communication. The gateway device is configured to store a plurality of parameters associated with each of the one or more smart sockets that are paired with the gateway device including one or more configuration parameters that configure the gateway device to interact with the respective smart socket in a configured manner, wherein the plurality of parameters are used and/or updated by the gateway device when the gateway device is in service. The gateway device is configured to repeatedly download a backup of the plurality of parameters associated with each of the one or more smart sockets to the supervisor controller. When the gateway device is removed from service and replaced with a replacement gateway device, the supervisor controller is configured to upload the backup of the plurality of parameters associated with each of the one or more smart sockets to the replacement gateway device. The replacement gateway device is configured to establish wireless communication with each of the one or more smart sockets based at least in part on one or more the plurality of parameters uploaded from the backup, and after the replacement gateway device is placed into service, at least some of the plurality of parameters are used and/or updated by the replacement gateway device.

In some cases, each of the one or more smart sockets is configured to repeatedly detect a measure of energy consumed by an appliance plugged into the plug receptacle of the respective smart socket and to repeatedly wirelessly communicate the measure of energy to the gateway device. In turn, the gateway device is configured to repeatedly receive the measure of energy wirelessly communicated by each of the one or more smart sockets, accumulate the measure of energy for each of the one or more smart sockets over time, and store a respective accumulated energy parameter for each of the one or more smart sockets. The plurality of parameters associated with each of the one or more smart sockets include the respective accumulated energy parameter. The replacement gateway device, once placed into service, continues to accumulate the measure of energy for each of the one or more smart sockets starting from a measure of accumulated energy that is based at least in part on the respective accumulated energy parameter uploaded from the backup.

In some cases, the plurality of parameters may include one or more of a type of appliance, if any, that is plugged into the respective plug of each of the one or more smart sockets, a current operating mode of the appliance, if any, that is plugged into the respective plug of each of the one or more smart sockets, a time schedule associated with the appliance, if any, that is plugged into the respective plug of each of the one or more smart sockets, and a lock power off setting associated with each of the one or more smart sockets.

Another illustrative method provides for replacing a gateway device that is functioning as a gateway between one or more smart sockets of a facility and a supervisor controller. Each of the one or more smart sockets includes a plug receptacle for receiving a plug from a respective appliance and each of the one or more smart sockets is configured to selectively turn power on and off to the respective plug receptacle based on a respective control signal received from the gateway device. The gateway device stores a plurality of parameters associated with each of the one or more smart sockets including one or more configuration parameters that configure the gateway device to interact with the respective smart socket in a configured manner. In some cases, the plurality of parameters include one or more dynamic parameters that are repeatedly updated by the gateway device when the gateway device is in service. The illustrative method includes downloading a backup of the plurality of parameters associated with each of the one or more smart sockets that are paired with the gateway device to a backup location remote from the gateway device. In this illustrative method, the gateway device is replaced with a replacement gateway device and the backup of the plurality of parameters associated with each of the one or more smart sockets is uploaded from the backup location to the replacement gateway device. The replacement gateway device is placed into service, wherein the plurality of parameters are used to configure the replacement gateway device to interact with the one or more smart sockets in the configured manner. In some cases, the replacement gateway device is configured to update one or more of the dynamic parameters starting from a value that is based at least in part on the respective parameter uploaded from the backup.

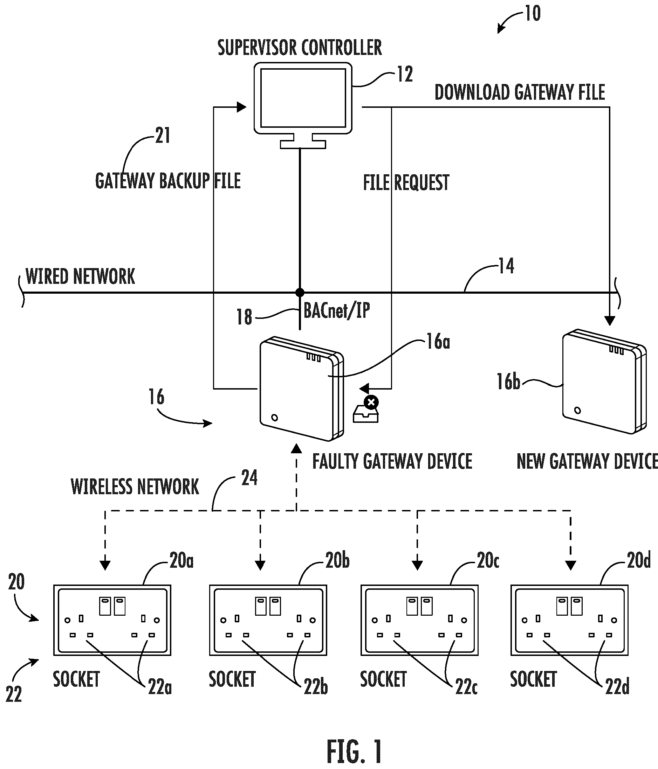

Figure 1 is a schematic block diagram showing an illustrative connected power system 10. The illustrative connected power system 10 includes a supervisor controller 12 that is operatively coupled with a wired network 14. In some cases, the supervisor controller 12 may be a server. A gateway device 16 is coupled to the wired network 14 via a building network 18. As an example, the building network 18 may be a BACnet or IP network, although other types of building networks 18 are contemplated. The wired network 14 may include the Internet. The gateway device 16 may communicate with the supervisor controller 12 via the building network 18 and the wired network 14. Figure 1 actually shows two gateway devices 16, including a first gateway device 16a that is labeled as being faulty, and a second gateway device 16b that is labeled as being a new or replacement gateway device that is intended to replace the faulty first gateway device 16a.

The connected power system 10 includes one or more smart sockets 20, individually labeled as 20a, 20b, 20c, and 20d. While a total of four smart sockets 20 are shown, the connected power system 10 may include any number of smart sockets 20. Each of the smart sockets 20 include one or more plug receptacles 22, with the plug receptacles 22 labeled as 22a within the smart socket 20a, labeled as 22b within the smart socket 20b, labeled 22c within the smart socket 20c, and labeled as 22d within the smart socket 20d. Each of the plug receptacles 22 are configured for receiving a plug from a respective appliance (not shown). Each of the smart sockets 20 are paired with the gateway device 16 via a wireless network 24. In some cases, the wireless network 24 may be a wireless mesh network. In some cases, one or more of the smart sockets 20 may be paired with the gateway device 16 via a wired network, such as a Power Line Communication (PLC) network, a Power Over Ethernet network, or any other suitable wired network. Each of the smart sockets 20 are configured to selectively turn power on and off to the respective plug receptacle 22 based on a respective control signal received from the gateway device 16 via the wireless communication.

The gateway device 16 is configured to store a plurality of parameters associated with each of the smart sockets 20 that are paired with the gateway device 16 including one or more configuration parameters that configure the gateway device 16 to interact with the respective smart socket 20 in a configured manner, wherein the plurality of parameters are used and/or updated by the gateway device 16 when the gateway device 16 is in service. The gateway device 16 is configured to repeatedly download a backup 21 of the plurality of parameters associated with each of the smart sockets 20 to a remote location, such as the supervisor controller 12.

When the gateway device 16 (such as the gateway device 16a) is removed from service and replaced with the replacement gateway device 16b, the supervisor controller 12 may be configured to upload the backup 21 of the plurality of parameters associated with each of the smart sockets 20 originally paired with the faulty gateway device 16a to the replacement gateway device 16b. The replacement gateway device 16b may be configured to establish wireless (or wired) communication with each of the smart sockets 20 based at least in part on one or more the plurality of parameters uploaded from the backup. After the replacement gateway device is placed in service, at least some of the plurality of parameters are used and/or updated by the replacement gateway device 16b.

In some cases, each of the smart sockets 20 may be configured to repeatedly detect a measure of energy consumed by an appliance plugged into the plug receptacle 22 of the respective smart socket 20 and to repeatedly wirelessly communicate the measure of energy to the gateway device 16. In turn, the gateway device 16 may be configured to repeatedly receive the measure of energy wirelessly communicated by each of the smart sockets 20, to accumulate the measure of energy for each of the smart sockets 20 over time, and to store a respective accumulated energy parameter for each of the smart sockets 20. In some cases, the plurality of parameters associated with each of the smart sockets 20 may include the respective accumulated energy parameter. This accumulated energy parameter may be communicated to the supervisor controller 12. When the replacement gateway device 16b is placed into service, the replacement gateway device 16b may continue to accumulate the measure of energy for each of the smart sockets 20 starting from a measure of accumulated energy that is based at least in part on the respective accumulated energy parameter uploaded from the backup. In some cases, the replacement gateway device 16b may increase the accumulated energy parameter uploaded from the backup by an offset when establishing the starting accumulated energy value. The offset may correspond to an amount of energy that is estimated to have been accumulated for each of the smart sockets 20 during a time between when the faulty gateway device 16a went off-line and the time when the replacement gateway device 16b went on-line, but this is not required.

In some cases, the plurality of parameters may include a type of appliance, if any, that is plugged into the respective plug of each of the smart sockets 20. In some cases, the plurality of parameters may include a current operating mode of the appliance, if any, that is plugged into the respective plug of each of the smart sockets 20. In some cases, the plurality of parameters may include a time schedule associated with the appliance, if any, that is plugged into the respective plug of each of the smart sockets 20. In some cases, the plurality of parameters may include a lock power off setting associated with each of the smart sockets 20.

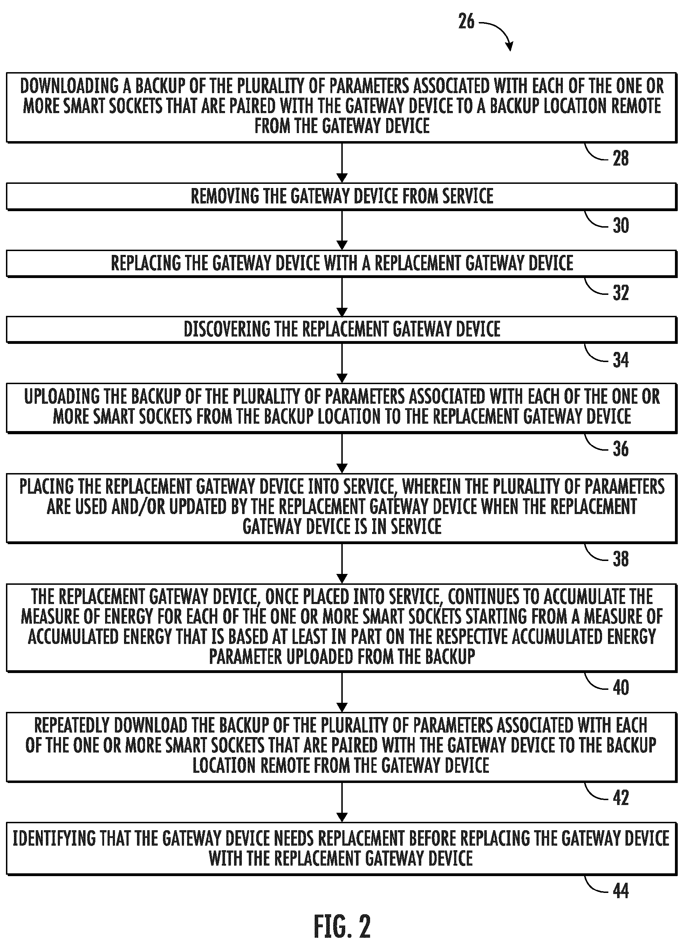

Figure 2 is a flow diagram showing an illustrative method 26 for replacing a gateway device (such as the gateway device 16) that is functioning as a gateway between one or more smart sockets of a facility (such as the smart sockets 20) and a supervisor controller (such as the supervisor controller 12). Each of the smart sockets are paired with the gateway device to establish a wireless communication channel between the respective smart socket and the gateway device. Each of the smart sockets includes a plug receptacle (such as the plug receptacles 22) for receiving a plug from a respective appliance and each of the smart sockets are configured to selectively turn power on and off to the respective plug receptacle based on a respective control signal received from the gateway device via the respective wireless communication channel. The gateway device stores a plurality of parameters associated with each of the one or more smart sockets that are paired with the gateway device including one or more configuration parameters that configure the gateway device to interact with the respective smart socket in a configured manner. The plurality of parameters are used and/or updated by the gateway device when the gateway device is in service.

The method 26 includes downloading a backup (such as the backup 21) of the plurality of parameters associated with each of the smart sockets that are paired with the gateway device to a backup location remote from the gateway device, as indicated at block 28. As an example, the backup location may be the supervisor controller. The gateway device (such as the gateway device 16a) is removed from service, as indicated at block 30. The gateway device is replaced with a replacement gateway device (such as the new replacement gateway device 16b), as indicated at block 32. The replacement gateway device is discovered, as indicated at block 34. The backup of the plurality of parameters associated with each of the one or more smart sockets is uploaded from the backup location to the replacement gateway device, as indicated at block 36. The replacement gateway device is placed into service, wherein the plurality of parameters are used and/or updated by the replacement gateway device when the replacement gateway device is in service, as indicated at block 38.

In some cases, each of the smart sockets are configured to repeatedly detect a measure of energy consumed by an appliance plugged into the plug receptacle of the respective smart socket, and to repeatedly wirelessly communicate the measure of energy to the gateway device via the respective wireless communication channel. The gateway device may be configured to repeatedly receive the measure of energy wirelessly communicated by each of the smart sockets, to accumulate the measure of energy for each of the smart sockets over time, and to store a respective accumulated energy parameter for each of the smart sockets. The plurality of parameters associated with each of the smart sockets may include the respective accumulated energy parameter. In some cases, the replacement gateway device, once placed into service, continues to accumulate the measure of energy for each of the smart sockets starting from a measure of accumulated energy that is based at least in part on the respective accumulated energy parameter uploaded from the backup, as indicated at block 40.

In some cases, the plurality of parameters may include a unique socket ID for each of the smart sockets that are associated with the gateway device. In some cases, the plurality of parameters may include a type of appliance, if any, that is plugged into the respective plug of each of the smart sockets. In some cases, the plurality of parameters may include a current operating mode of the appliance, if any, that is plugged into the respective plug of each of the smart sockets. In some cases, the plurality of parameters may include a time schedule associated with the appliance, if any, that is plugged into the respective plug of each of the smart sockets. In some cases, the plurality of parameters may include a lock power off setting associated with each of the smart sockets.

The wireless communication channel for each of the smart sockets that are associated with the gateway device may include a Bluetooth communication channel, and wherein the plurality of parameters include a unique Bluetooth ID for each of the smart sockets that are associated with the gateway device. In some cases, each of the smart sockets is paired with the gateway device via a wireless mesh network, and the wireless communication channel for each of the smart sockets that are associated with the gateway device may be part of the wireless mesh network.

In some cases, the method 26 may further include repeatedly downloading the backup of the plurality of parameters associated with each of the smart sockets that are paired with the gateway device to the backup location remote from the gateway device, as indicated at block 42. In some cases, the method 26 may further include identifying that the gateway device needs replacement before replacing the gateway device with the replacement gateway device. As an example, identifying that the gateway device needs replacement may include the supervisor controller identifying that the gateway device is offline.

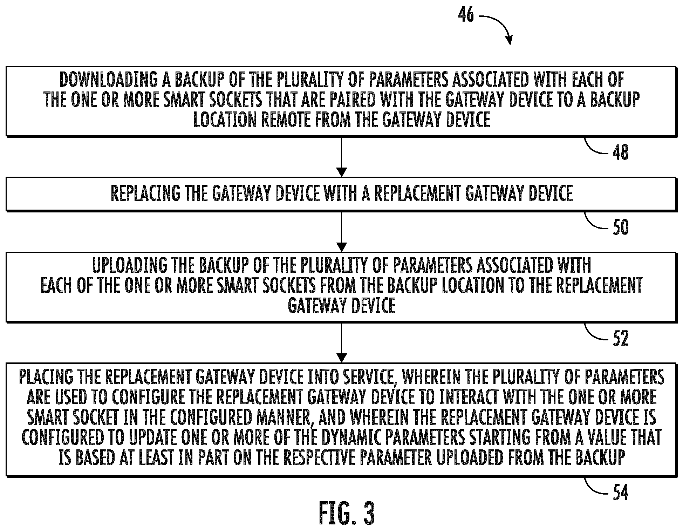

Figure 3 is a flow diagram showing an illustrative method 46 for replacing a gateway device (such as the gateway device 16) that is functioning as a gateway between one or more smart sockets of a facility (such as the smart sockets 20) and a supervisor controller (such as the supervisor controller 12). Each of the smart sockets include a plug receptacle (such as the plug receptacles 22) for receiving a plug from a respective appliance and each of the smart sockets are configured to selectively turn power on and off to the respective plug receptacle based on a respective control signal received from the gateway device. The gateway device stores a plurality of parameters associated with each of the smart sockets including one or more configuration parameters that configure the gateway device to interact with the respective smart socket in a configured manner. In this example, the plurality of parameters include one or more dynamic parameters that are repeatedly updated by the gateway device when the gateway device is in service.

The method 46 includes downloading a backup of the plurality of parameters associated with each of the smart sockets that are paired with the gateway device to a backup location remote from the gateway device, as indicated at block 48. The gateway device is replaced with a replacement gateway device, as indicated at block 50. The backup of the plurality of parameters associated with each of the one or more smart sockets is uploaded from the backup location to the replacement gateway device, as indicated at block 52. The replacement gateway device is placed into service, wherein the plurality of parameters are used to configure the replacement gateway device to interact with the one or more smart socket in the configured manner, and wherein the replacement gateway device is configured to update one or more of the dynamic parameters starting from a value that is based at least in part on the respective parameter uploaded from the backup, as indicated at block 54.

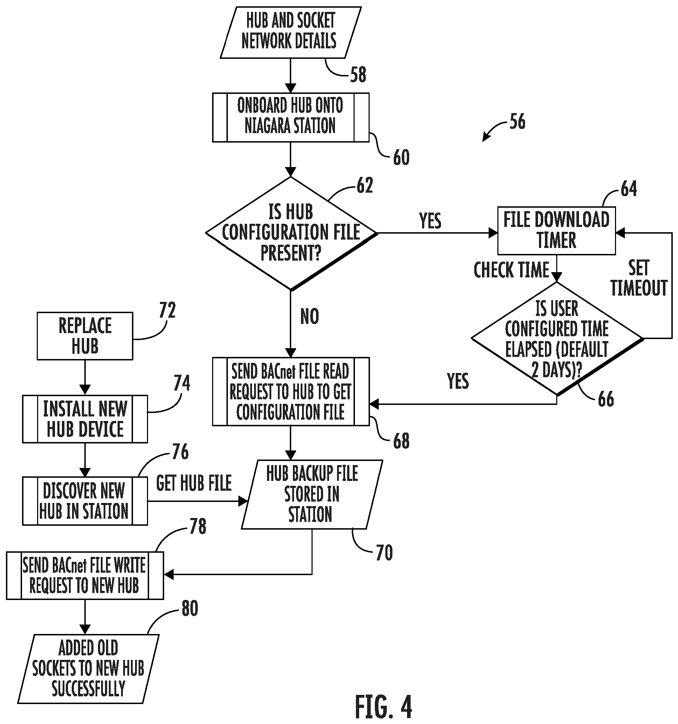

Figure 4 is a flow diagram showing an illustrative method 56. The method 56 begins with hub (gateway device) and socket network details, as indicated at block 58. The hub (gateway device) is onboarded onto Niagara^{™} (e.g. supervisor controller 12) as indicated at block 60. A determination is made at decision block 62 as to whether the hub (gateway device) configuration file is backed up. If so, control passes to block 64, where a file download timer is set. The time is checked at a decision block 66, as to whether a user configured time has elapsed. If not, the timeout is set and control reverts to block 64. If so, control passes to block 68 where a BACnet file read request is sent to the gateway device to get a backup of the configuration file. As can be seen, a BACnet file read request is sent to the gateway device to get an updated backup of the configuration file of the gateway device periodically (e.g. every user configured time elapse - default 2 days).

Returning to decision block 62, if no configuration was found at decision block 62, control passes to block 68. The hub (gateway device) backup file is stored, as indicated at block 70. A decision to replace the hub (gateway device) is made, as indicated at block 72. The new replacement hub (gateway device) is installed, as indicated at block 74. The new hub (gateway device) is discovered, as indicated at block 76. The backup file is retrieved, as indicated at block 70. A BACnet write request is sent to the new hub (gateway device) to write the backup file to the new hub (gateway device), as indicated at lock 78. The old sockets and their parameters are then successfully added to the new hub (gateway device), as indicated at block 80.

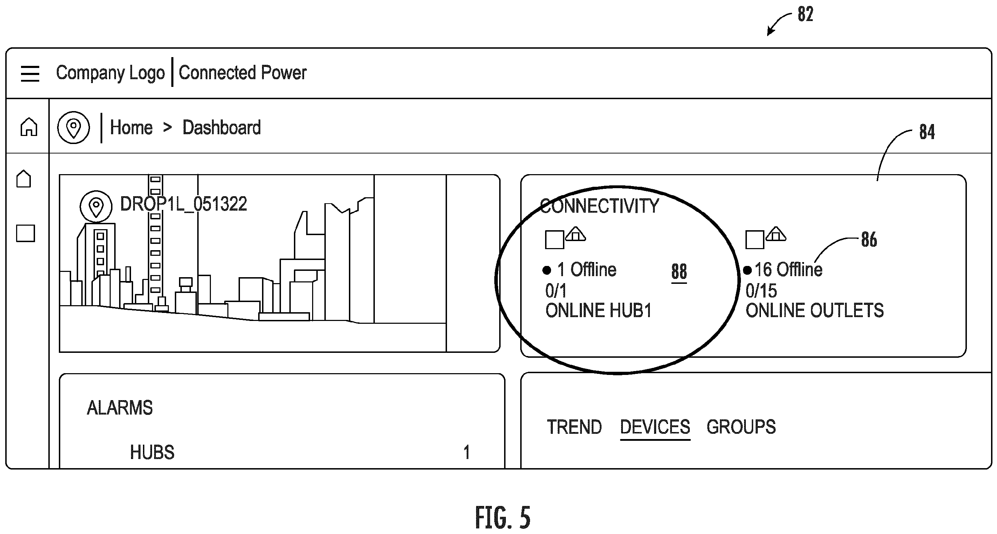

Figure 5 is a screen capture of a screen 82 that may be generated and displayed by the supervisor controller 12, for example. The screen 82 includes a connectivity section 84 showing how many devices are online and whether any devices are offline. As shown, 16 devices are online and 1 device is offline, as indicated by alphanumeric displays 86 and 88, respectively.

As shown, there is a hub (gateway device) that is offline and needs to be replaced. The power and Ethernet cables may be disconnected from the offline hub (gateway device), and the offline hub (gateway device) may be physically removed. The power and Ethernet cables may be connected to the replacement hub (gateway device). The user can go into the dashboard of the supervisor controller and instruct the system to discover the replacement hub (gateway device). Once discovered, the user may instruct the system to download the backup file to the new hub (gateway device). In some cases, this may include pressing and holding a programming button on the back of the replacement hub (gateway device) 16b. In some cases, once the new hub (gateway device) is discovered and added, the supervisor controller may automatically identify and upload the appropriate backup file to the new hub (gateway device) to restore the configurations.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for replacing a gateway device that is a gateway between one or more smart sockets of a facility and a supervisor controller, each of the one or more smart sockets is paired with the gateway device to establish a wireless communication channel between the respective smart socket and the gateway device, each of the one or more smart sockets includes a plug receptacle for receiving a plug from a respective appliance and each of the one or more smart sockets is configured to selectively turn power on and off to the respective plug receptacle based on a respective control signal received from the gateway device via the respective wireless communication channel, the gateway device stores a plurality of parameters associated with each of the one or more smart sockets that are paired with the gateway device including one or more configuration parameters that configure the gateway device to interact with the respective smart socket in a configured manner, wherein the plurality of parameters are used and/or updated by the gateway device when the gateway device is in service, the method comprising:
downloading a backup of the plurality of parameters associated with each of the one or more smart sockets that are paired with the gateway device to a backup location remote from the gateway device;
removing the gateway device from service;
replacing the gateway device with a replacement gateway device;
discovering the replacement gateway device;
uploading the backup of the plurality of parameters associated with each of the one or more smart sockets from the backup location to the replacement gateway device; and
placing the replacement gateway device into service, wherein the plurality of parameters are used and/or updated by the replacement gateway device when the replacement gateway device is in service.

2. The method of claim 1, wherein:
each of the one or more smart sockets is configured to:
repeatedly detect a measure of energy consumed by an appliance plugged into the plug receptacle of the respective smart socket;
repeatedly wirelessly communicate the measure of energy to the gateway device via the respective wireless communication channel;
the gateway device is configured to:
repeatedly receive the measure of energy wirelessly communicated by each of the one or more smart sockets;
accumulate the measure of energy for each of the one or more smart sockets over time;
store a respective accumulated energy parameter for each of the one or more smart sockets; and
wherein the plurality of parameters associated with each of the one or more smart sockets include the respective accumulated energy parameter.

3. The method of claim 2, wherein the replacement gateway device, once placed into service, continues to accumulate the measure of energy for each of the one or more smart sockets starting from a measure of accumulated energy that is based at least in part on the respective accumulated energy parameter uploaded from the backup.

4. The method of claim 1, wherein the supervisor controller is a server, and the gateway device is operatively coupled to the server via a wired connection.

5. The method of claim 4, wherein the wired connection comprises the Internet.

6. The method of claim 1, wherein the backup location comprises the supervisor controller.

7. The method of claim 1, wherein the plurality of parameters include a unique socket ID for each of the one or more smart sockets that are associated with the gateway device.

8. The method of claim 1, wherein each of the one or more smart sockets is paired with the gateway device via a wireless mesh network, and the wireless communication channel for each of the one or more smart sockets that are associated with the gateway device is part of the wireless mesh network.

9. The method of claim 1, wherein the plurality of parameters include a type of appliance, if any, that is plugged into the respective plug of each of the one or more smart sockets.

10. The method of claim 1, wherein the plurality of parameters include a current operating mode of an appliance, if any, that is plugged into the respective plug of each of the one or more smart sockets.

11. The method of claim 1, wherein the plurality of parameters include a time schedule associated with an appliance, if any, that is plugged into the respective plug of each of the one or more smart sockets.

12. The method of claim 1, wherein the plurality of parameters include a lock power off setting associated with each of the one or more smart sockets.

13. A system comprising:
a supervisor controller;
a gateway device;
one or more smart sockets, wherein each of the one or more smart sockets include a plug receptacle for receiving a plug from a respective appliance;
each of the one or more smart sockets is paired with the gateway device to establish wireless communication between the respective smart socket and the gateway device, and each of the one or more smart sockets is configured to selectively turn power on and off to the respective plug receptacle based on a respective control signal received from the gateway device via the wireless communication;
the gateway device is configured to store a plurality of parameters associated with each of the one or more smart sockets that are paired with the gateway device including one or more configuration parameters that configure the gateway device to interact with the respective smart socket in a configured manner, wherein the plurality of parameters are used and/or updated by the gateway device when the gateway device is in service;
the gateway device is configured to repeatedly download a backup of the plurality of parameters associated with each of the one or more smart sockets to the supervisor controller;
when the gateway device is removed from service and replaced with a replacement gateway device, the supervisor controller is configured to upload the backup of the plurality of parameters associated with each of the one or more smart sockets to the replacement gateway device;
the replacement gateway device is configured to establish wireless communication with each of the one or more smart sockets based at least in part on one or more the plurality of parameters uploaded from the backup; and
after the replacement gateway device is placed service, at least some of the plurality of parameters are used and/or updated by the replacement gateway device.

14. The system of claim 13, wherein:
each of the one or more smart sockets is configured to:
repeatedly detect a measure of energy consumed by an appliance plugged into the plug receptacle of the respective smart socket;
repeatedly wirelessly communicate the measure of energy to the gateway device;
the gateway device is configured to:
repeatedly receive the measure of energy wirelessly communicated by each of the one or more smart sockets;
accumulate the measure of energy for each of the one or more smart sockets over time;
store a respective accumulated energy parameter for each of the one or more smart sockets;
wherein the plurality of parameters associated with each of the one or more smart sockets include the respective accumulated energy parameter; and
wherein the replacement gateway device, once placed into service, continues to accumulate the measure of energy for each of the one or more smart sockets starting from a measure of accumulated energy that is based at least in part on the respective accumulated energy parameter uploaded from the backup.

15. The system of claim 13, wherein the plurality of parameters include one or more of:
a type of appliance, if any, that is plugged into the respective plug of each of the one or more smart sockets;
a current operating mode of an appliance, if any, that is plugged into the respective plug of each of the one or more smart sockets;
a time schedule associated with an appliance, if any, that is plugged into the respective plug of each of the one or more smart sockets; and
a lock power off setting associated with each of the one or more smart sockets.
